# EUROPEAN PATENT SPECIFICATION

(11) **EP 3 773 317 B1**
(45) Date of publication and mention of the grant of the patent: **13.12.2023**
(21) Application number: 19775021.9
(22) Date of filing: 29.03.2019
(51) Int. Cl.: A61C 3/02

(54) **SUBGINGIVAL SAFE END DENTAL BUR**
SUBGINGIVALER ZAHNBOHRER MIT SICHEREM ENDE
FRAISE DENTAIRE À EXTRÉMITÉ SÛRE SOUS-GINGIVALE

(30) Priority: 30.03.2018 US 201862761568 P
(43) Date of publication of application: 17.02.2021
(73) Proprietor: Morris, Christopher, Brampton, Ontario L6Y 0M5 (CA)
(72) Inventor: Morris, Christopher, Brampton, Ontario L6Y 0M5 (CA)
(74) Representative: Sach, Greg Robert
(86) International application number: PCT/CA2019/000087
(87) International publication number: WO 2019/183710

(56) References cited:
- GB-A- 379 200
- US-A1- 2002 037 490
- US-A1- 2002 037 490
- US-A1- 2004 081 940
- US-A1- 2004 081 940
- US-A1- 2007 101 827

## Description

### Field of the invention

The field of the invention is burs used in dentistry. A dental bur fits into a hand drill to cut the tooth and or restorative material.

### Background of the Invention

Teeth are restored and built up with a hard composite resin material which is similar in hardness to tooth material and is also the same color as teeth.

This creates a problem in dentistry where one cannot cut away the composite resin material with a sharp cutting bur and know for sure whether or not the tooth is also being cut. This is due to the inability to see or feel the difference between the composite resin and the tooth material. Currently dentists go by shape of the tooth, to know where they should cut the filling material.

However in areas that are difficult to see, to prevent cutting into the tooth material, dental burs have been manufactured with safe end tips.

US 2007/101827 A1, GB 379 200 A and US 2004/081940 A1 disclose prior art dental burs.

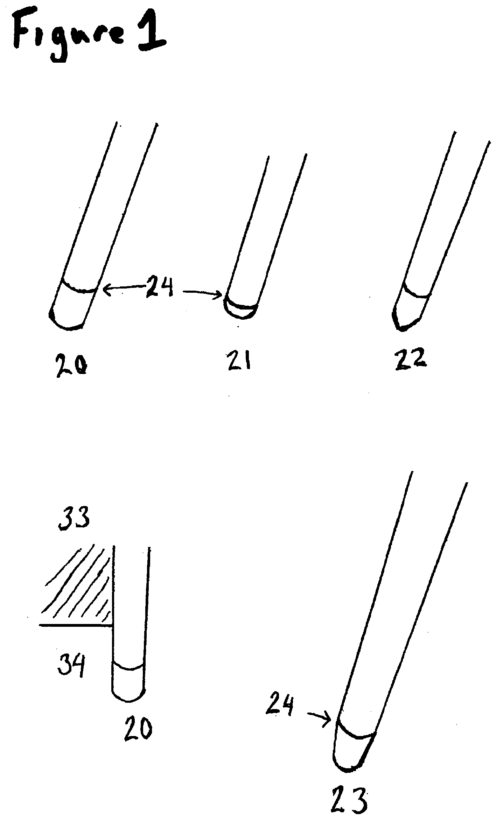

Figure 1 shows a variety of current safe end burs. Safe end tips are presently in the shape of a round end cylinder as in #20 or a round bulbous tip as in #21 or a cylinder with a pointed tip as in #22.

In all these cases the safe end meets the tooth on the same plane as the cutting surface to prevent the cutting of the tooth material at the join between the cutting surface and the safe end. The join between the safe end and the cutting surface is shown in Figure 1 as #24. Figure 1 shows a safe end bur 20 with the prior art cylinder safe end cutting the margin of a filling shown as #33 with enamel shown as #34 where the margin of the filing is on the same 180 degree plane as the enamel.

The filling 33 is generally found above the gum tissues and so the prior safe end functions well to create a flush margin with the filling material above the gum tissues . However there are problems, if the dentist wants to create a margin of the filling material below the gum tissues with the current safe end burs?

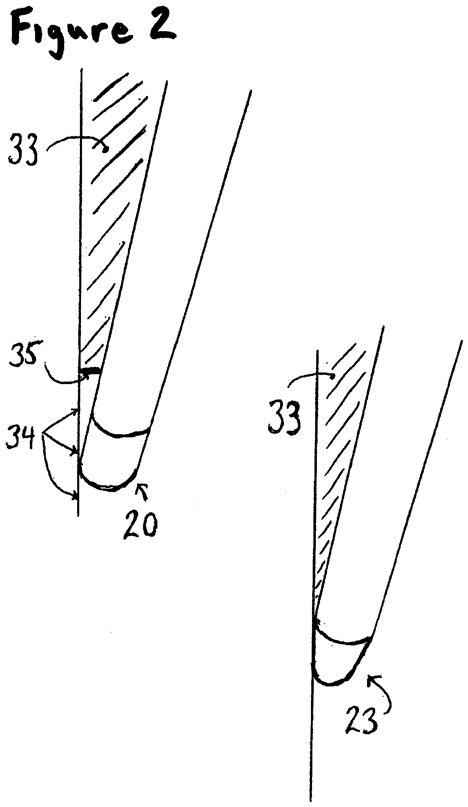

The use of the prior art safe end burs shown in Figure 1 will result in a microscopic ledge of composite resin when the composite resin is being cut away below the gum tissue . Figure 2 shows the prior art safe end # 20 of Figure 1 cutting the filling material 33 but leaving a microscopic edge.

Such a small ledge may not be noticed in many areas of the tooth as it is almost microscopic in size. However the tiny ledge can harbour bacteria.

Therefore to cut a composite resin margin below the gum tissue that is perfectly flush to the tooth surface with no ledge, a new type of safe end is needed that will not leave a ledge.

This new type of safe end has an angle on the safe end where the center of the angle is placed at the join between a flat surface on the safe end and the flat cutting surface of the bur shown as # 24 in Figure 1. The new safe end tip is shown in Figure 1 as #23. The flat cutting surface of the new bur may be metal flutes or diamond grit.

Figure 2 also shows how the new safe end with an angle between the flat surface of the safe end and the flat surface of the cutting surface can be used to trim the filling material leaving no ledge.

The new safe end bur also needs to be able to cut the filling material below the gum tissues in a limited area of space. If the subgingival bur is too small it can not cut efficiently and if it is too large it can not fit under the gum tissues without cutting the gum tissues.

The safe end also has to provide tactile sense to the dentist. To create such tactile sense the safe end cannot be too small or the dentist will have less ability to feel the soft root with the safe end and yet at the same time the safe end cannot be too big or it will not fit under the gum tissues.

To provide tactile sense to the dentist the flat surface of the safe end should not be less than 0.2 mm in length but is preferably 0.3 to 0.4 mm in length.

Also it is preferred that such a safe end bur be able to be used to trim composite resin margins between the teeth. Therefore, ideally the bur is thin. However when prototypes were made that were thin, in order to fit between the teeth more easily, it was found that the thin bur would dig into the composite when cutting the filling material creating a corduroy surface instead of smoothly shaving the filling material.

Thicker burs do not gouge the surface when pressure is applied but can be used in a firm shaving action to create a smooth composite resin surface. However a thick bur cannot fit between the teeth.

From testing prototypes for use between the teeth, it has been learned by the inventor that preferably the bur has to fit between the teeth and extend between the teeth into the embrasure spaces without cutting the adjacent teeth for a working or cutting distance of about 5 mm. Therefore it is discovered that for the most effective and widest application or use of the new safe end bur that even 5mm from the tip of the bur , the bur still has to be narrow enough to fit between the embrasure spaces of the teeth.

If the new bur is too thin it cannot cut efficiently and if it is too thick at 5mm from the tip it cannot fit between the teeth. What angle of divergence of the sides of the bur will produce this small range of acceptability for the purpose of a sub-gingival bur. From testing and use in the mouth it has been found that the angle of divergence of the sides of the cutting surface of the bur with a preferred tip diameter of .5 mm Is from 1.5 degrees to 3.5 degrees from the long axis of the bur but preferably is 2.23 degrees. The functional range of this angle is so small that variance of over 0.75 degrees smaller or larger makes the bur incapable of its desired use.

Creating a safe end that is for use above the gum tissues is a simple matter. However creating a safe end to be used below the gum tissues and between teeth is difficult and requires numerous prototypes to be fabricated and used in trials to establish the best dimensions of the safe end itself and the dimensions of the cutting surface of the bur to give the best performance possible.

After making numerous different safe end burs and using them in the mouth on patients the inventor believes that the safe end bur that functions best to overcome all the above requirements is as follows;
1 the width of the safe end tip is preferably .55 mm but is from .35 mm to .7 mm
2 the length of the safe end tip is preferably .5mm but is from .35mm to .7 mm
3 the angle at the join of the flat surface of the safe end and the flat surface of the cutting surface is preferably 170 degrees but is from 177 degrees to 155 degrees.
4 the flat side of the safe end is preferably 0.3 to 0.4mm in length but should not be less than .2mm
5 the angle of the flat cutting surface to the long axis of the bur is preferably 2.23 degrees but is from 1.5 degrees to 3.5 degrees The invention is set out in the appended claim 1.

### Description of the Figures

Figure 1 shows a prior art cylinder safe end #20 and a prior art round bulbous safe end as #21 and a prior art cylinder with a pointed tip safe end as #22. The join between the safe end and the cutting surface is shown as #24. The new safe end of this invention is shown as #23. Figure 1 also shows a prior art safe end bur with the cylinder safe end #20 cutting the margin of a filling #33 with enamel shown as #34 where the margin of the filing is on the same 180 degree plane as the enamel.
Figure 2 shows the prior art safe end # 20 of Figure 1 cutting the filling material 33 but leaving a microscopic ledge #35. Figure 2 also shows the new safe end 23 cutting the filling material with no ledge.

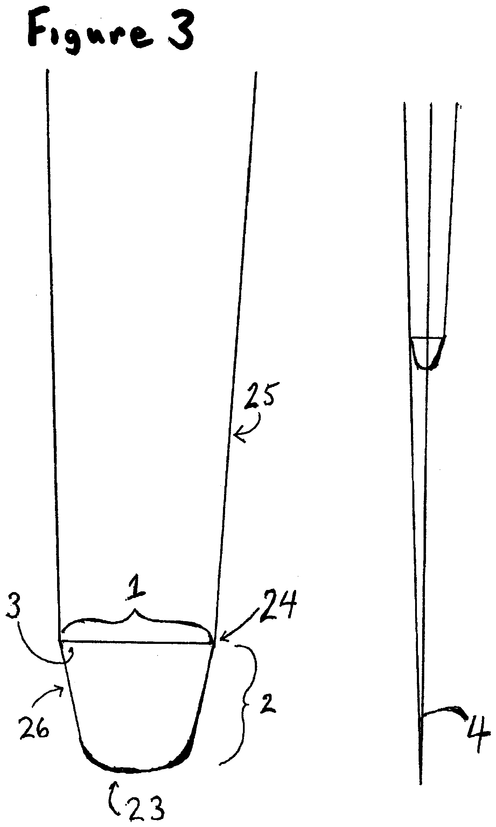

Figure 3 Shows the new safe end bur 23 with a flat cutting surface 25 and a flat surface on the safe end 26 with the join between the cutting surface 25 and the flat safe end surface 26 shown as 24 with the angle between 25 and 26 as 3 Figure 3 shows the total width of the safe end as 1 and the total length of the safe end as 2. The divergence of the flat.cutting surface 25 from the central axis of the bur is shown as angle 4.

## Claims

1. A dental bur (23) with a flat cutting surface (25) and a safe end non cutting tip with a flat surface (26) on the safe end **characterized in that** the flat cutting surface and the flat surface on the safe end meet at an angle (3) between 177 and 157 degrees measured from inside the bur, and the safe end non cutting tip has a total width (1) from 0.35 mm to 0.7 mm and a length (2) from 0.35 mm to 0.7 mm, and a divergence (4) of the flat cutting surface of the bur in a straight plane from the central axis of the bur is between 1.5 and 3.5 degrees.

## Patentansprüche

1. Zahnbohrer (23) mit einer flachen Schneidoberfläche (25) und einer nichtschneidenden Spitze am sicheren Ende mit einer flachen Oberfläche (26) am sicheren Ende, **dadurch gekennzeichnet, dass** die flache Schneidoberfläche und die flache Oberfläche am sicheren Ende in einem Winkel (3) zwischen 177 und 157 Grad aufeinander treffen, der von der Innenseite des Bohrers gemessen ist, und die nichtschneidende Spitze am sicheren Ende eine Gesamtbreite (1) von 0,35 mm bis 0,7 mm und eine Länge (2) von 0,35 mm bis 0,7 mm hat, und eine Abweichung (4) der flachen Schneidoberfläche des Bohrers in einer geraden Ebene von der Mittelachse des Bohrers zwischen 1,5 und 3,5 Grad beträgt.

## Revendications

1. Fraise dentaire (23) avec une surface de coupe plane (25) et une pointe non coupante à extrémité de sécurité avec une surface plane (26) sur l'extrémité de sécurité **caractérisée en ce que** la surface de coupe plane et la surface plane sur l'extrémité de sécurité se rencontrent à un angle (3) compris entre 177 et 157 degrés mesuré depuis l'intérieur de la fraise, et la pointe non coupante à extrémité de sécurité a une largeur totale (1) de 0,35 mm à 0,7 mm et une longueur (2) de 0,35 mm à 0,7 mm, et un écart (4) de la surface de coupe plane de la fraise dans un plan rectiligne par rapport à l'axe central de la fraise est compris entre 1,5 et 3,5 degrés.
